# EUROPEAN PATENT SPECIFICATION

(11) **EP 1 598 968 B1**
(45) Date of publication and mention of the grant of the patent: **25.10.2006**
(21) Application number: 05018718.6
(22) Date of filing: 10.06.1999
(51) Int. Cl.: H04J 3/06, G06F 1/14

(54) **Enhancements to time synchronization in distributed systems**
Verbesserungen der Zeitsynchronisierung in verteilten Systemen
Améliorations portées à la synchronisation temporelle dans des systèmes distribués

(30) Priority: 10.09.1998 US 151071
(43) Date of publication of application: 23.11.2005
(62) Divisional of application: 99111339.0
(73) Proprietor: Agilent Technologies, Inc. (a Delaware corporation), Palo Alto, California 94306-2024 (US)
(72) Inventor: Eidson, John, Palo Alto, CA 94303 (US)
(74) Representative: Schoppe, Fritz

(56) References cited:
- MILLS D L: "MEASURED PERFORMANCE OF THE NETWORK TIME PROTOCOL IN THE INTERNET SYSTEM" NETWORK WORKING GROUP REQUEST FOR COMMENTS, no. 1128, October 1989 (1989-10), pages I-II,1-18, XP002970984
- MILLS D L: "INTERNET TIME SYNCHRONIZATION: THE NETWORK TIME PROTOCOL" IEEE TRANSACTIONS ON COMMUNICATIONS, IEEE INC. NEW YORK, US, vol. 39, no. 10, 1 October 1991 (1991-10-01), pages 1482-1493, XP000275311 ISSN: 0090-6778

## Description

The present invention pertains to the field of distributed systems. More particularly, this invention relates to enhancements to time synchronization in distributed systems.

Distributed systems are commonly arranged as a collection of nodes which are interconnected via one or more network communication links. These network communication links may be packetized links such as Ethernet or one or more of a variety of other packetized links that are adapted to distributed control system applications.

Distributed control systems commonly benefit from precise control of the timing at the distributed nodes. U.S. Patent No. 5,566,180 of Eidson et. al. teaches a method and apparatus for providing precise control of timing in distributed nodes by synchronizing the local clocks in the distributed nodes. The synchronization protocol of Eidson et. al. involves the exchange of timing data packets and follow up packets among the nodes so that the delay in the transfer of a timing data packet from a first node to a second node in combination with timing information in a follow up packet can be used to accurately adjust a local clock in the second node.

A variety of conditions that are commonly found in distributed systems may introduce variation or jitter in the delay in the transfer of a timing data packet. For example, communication circuitry at various points in the distributed system may introduce jitter. In addition, communication circuits such as gateways can introduce jitter that depends on the volume of traffic in the system. Unfortunately, such jitter may reduce the accuracy of time synchronization in a distributed system.

US 5,640,388 A describes a system for transmitting packets wherein a PCR (program clock reference) is inserted into transport packets. A dejitter device is provided between the transmission device and the reception device for removing jitter introduced by transport of the packets on a network. A transport packet is examined by the dejitter device and a nominal transmission bit rate is communicated to the dejitter device. The data packets are stored in a buffer and are output at the nominal bit rates, whereby a jitter of the transport packets relative to each other is removed.

Mills, "Measured Performance of the Network Time Protocol in the Internet System", Network Working Group Request for Comments 1128, 1989 and Mills, "Internet time synchronization: the network time protocol, IEEE Transactions on Communications, Vol39, No. 10, 1991 describe a network time protocol (NTP) used for clock synchronizing on the Internet. A round trip delay and a clock offset relative to a time server is calculated based on four most recent time-stamps. From each of the n most recent calculated roundtrip delays, the one with the lowest delay is selected as an estimate for the round trip delay and the relative offset of the clocks.

It is the object of the present invention to provide a system for synchronizing a local clock within a distributed system allowing a higher accuracy of time synchronization.

This object is solved by a system according to claim 1.

A variety of enhancements to a time synchronization protocol for a distributed system are disclosed. The enhancements may be embodied in a distributed system which includes a first node and a second node and one or more intervening communication links that may includes communication devices such as repeaters or gateways. The first node includes a local clock and circuitry that generates a timing data packet and a follow up packet. The timing data packet has a unique timing point and the follow up packet includes a time-stamp obtained from the local clock that indicates a time at which the timing data packet is generated. The second node includes circuitry that receives the timing data packet and the follow up packet via a communication link. The second node further includes a local clock and circuitry that obtains a local time value from the local clock when the unique timing point is detected. The difference between the time-stamp from the follow up packet and the local time value indicates a relative synchronization of the local clocks in the first and second nodes.

The enhancements disclosed herein include techniques for improving the accuracy in time synchronization by separating the unique timing point from a delimiter for the timing data packet. The enhancements include techniques that compensate for jitter associated with communication circuitry in the distributed system including jitter associated with physical interfaces and gateways in the distributed system. These techniques may involve specialized circuitry in the communication circuitry to compensate for jitter or special processing of received timing data packets or the introduction of follow up packets that inform receiving nodes of measured jitter or a combination of these techniques.

Other features and advantages of the present invention will be apparent from the detailed description that follows.

The present invention is described with respect to particular exemplary embodiments thereof and reference is accordingly made to the drawings in which:
**Figure 1** shows a distributed system which includes a pair of nodes interconnected via a communication link;
**Figure 2** shows an embodiment of a physical interface which includes a UTP detection circuit that improves accuracy in the synchronization of the local clocks by reducing jitter in the detection of the UTP;
**Figure 3** shows an alternative embodiment of a physical interface which includes a phase error measurement circuit that improves accuracy in the synchronization of the local clocks by reducing jitter in the detection of the UTP;
**Figure 4** shows a distributed system in which nodes are coupled to different communication links interconnected by a communication device;
**Figure 5** shows an embodiment of a communication device which includes mechanisms for reducing time synchronization inaccuracies caused by jitter;
**Figure 6** shows an alternative embodiment of a communication device which includes mechanisms for reducing time synchronization inaccuracies caused by jitter;
**Figure 7** shows an embodiment of a communication device which includes mechanisms for measuring the delay introduced in the communication device and for passing the measured delay onto a node in a follow up packet.

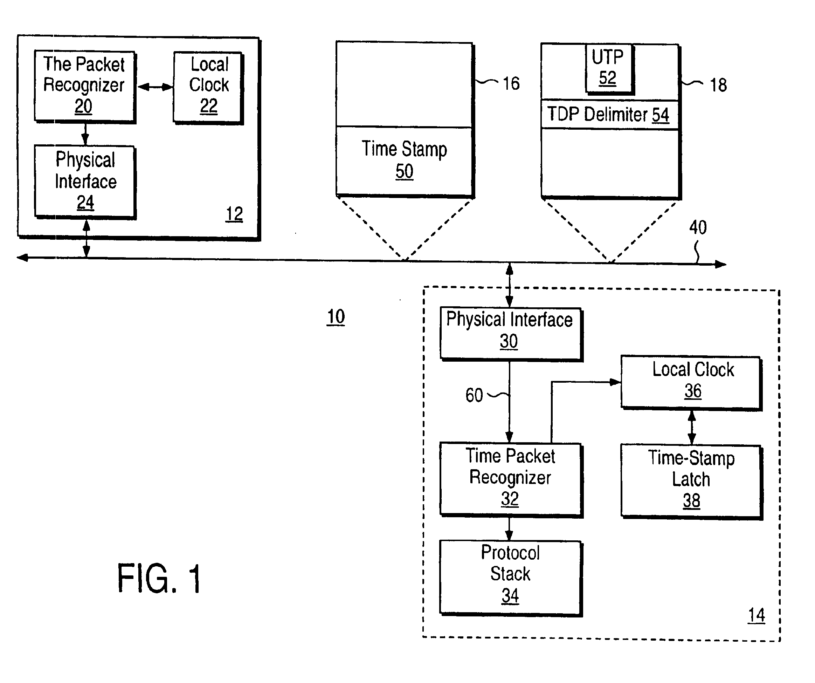

**Figure 1** shows a distributed system 10 which includes a pair of nodes 12 and 14 interconnected via a communication link 40. The nodes 12 and 14 include a pair of local clocks 22 and 36, respectively, which keep local time for the respective nodes 12 and 14. The nodes 12 and 14 also include a pair of time packet recognizers 20 and 32, respectively, which exchange messages via the communication link 40 to maintain synchronization of the local clocks 22 and 36.

For example, the time packet recognizer 20 generates a timing data packet 18 and transfers it via the communication link 40 through a physical interface 24 that enables communication via the communication link 40. The timing data packet 18 includes a unique timing point (UTP) 52 and a timing data packet (TDP) delimiter 54. At the time that the time packet recognizer 20 transfers the timing data packet 18 to the physical interface 24 it samples the local clock 22 to obtain a time-stamp 50. The time-stamp 50 indicates the local time in the node 12 at which the time packet recognizer 20 transferred the timing data packet 18 to the physical interface 24. Thereafter, the time packet recognizer 20 generates a follow up packet 16 and transfers it via the communication link 40. The follow up packet 16 includes the time-stamp 50.

The time packet recognizer 32 receives the timing data packet 18 through a physical interface 30 that enables communication via the communication link 40. The physical interface 30 generates a set of recovered signals 60 in response to the reception of the timing data packet 18. The recovered signals 60 include a recovered bit stream which carries the elements of the timing data packet 18 including the UTP 52 and the TDP delimiter 54. The recovered signals 60 include a recovered clock signal for the recovered bit stream.

In one embodiment, the time packet recognizer 32 uses the recovered signals 60 to detect the UTP 52. Upon detection of the UTP 52 in the recovered bit stream, the time packet recognizer 32 causes a time-stamp latch 38 to latch a local time value from the local clock 36. Thereafter, the time packet recognizer 32 verifies whether the timing data packet 18 contains the TDP delimiter 54. The TDP delimiter 54 is a unique pattern that distinguishes timing data packets from other types of packets carried on the communication link 40. If the TDP delimiter 54 is not found in the packet 18 then the packet 18 is not a timing data packet and the time packet recognizer 32 discards the time value just latched by the time-stamp latch 38.

In another embodiment, the UTP 52 precedes the TDP delimiter 54 in the timing data packet 18. In yet another embodiment, the UTP 52 and the TDP delimiter 54 are merged into the same indicator in the timing data packet 18.

The time value held in the time-stamp latch 38 indicates the local time at which the time packet recognizer 32 received the timing data packet 18. Thereafter, the time packet recognizer 32 receives the follow up packet 16 and extracts the time-stamp 50. The difference between the time-stamp 50 and the time value in the time-stamp latch 38 indicates the relative synchronization of the local clocks 22 and 36. Once this difference is computed the time packet recognizer 32 uses it to adjust the time value in the local clock 36 to conform the local clock 36 to the local clock 22.

The adjustment of the time value in the local clock 36 may be accomplished by implementing the local clock 36 as a counter driven by an oscillator with sufficient stability. The least significant few bits of the counter may be implemented as an adder so that the increment on oscillator periods may be occasionally increased or decreased to effectively speed up or slow down the local clock 36 in accordance with the results of the computation of the difference between the time-stamp 50 and the time value held in the time-stamp latch 38.

The nodes 12 and 14 may be any type of node in the distributed system 10. For example, any one or both of the nodes 12 and 14 may be a sensor node or an actuator node or an application controller node or a combination of these in a distributed control system. Any one or more of the nodes 12 and 14 may be a computer system such as a personal computer.

The communication link 40 may be implemented with one or more of a variety of communication mechanisms. In one embodiment, the communication link 40 is an Ethernet communication network. In another embodiment, the communication link 40 is a LonTalk field-level control bus which is specialized for the process control environment. In other embodiments, the communication link 40 may be implemented with time division multiple access (TDMA) or token ring protocols to name only a few possibilities.

In one embodiment, the UTP 52 is a start-of-frame (SOF) delimiter which marks the end of a preamble portion of the packet 18. The SOF delimiter is a predefined bit pattern which depends on the particular communication protocol being used on the communication link 40.

In one embodiment, the TDP delimiter 54 is a unique multi-cast address which is allocated for timing data packets. In other embodiments, timing data packets are delimited by mechanisms such as differing carrier frequencies, coding methods, or transmission paths from the carrier frequencies, coding methods, or transmission paths used by other packets.

The physical interface 30 includes a phase lock loop circuit and may also include a squelch circuit each of which may introduce jitter in the recovered signals 60 received by the time packet recognizer 32. This jitter may cause inaccuracies in the detected time of the UTP 52 by the time packet recognizer 32 which can reduce the overall accuracy of synchronization between the local clocks 22 and 36 which may be obtained by the above technique.

One method for reducing the negative effects of jitter introduced by the physical interface 30 is to average the differences computed between the time value in the time-stamp latch 38 and the time-stamp 50 for a number of timing data packet and corresponding follow up packet pairs. This computed average may then be used to adjust the local clock 36.

For example, the time packet recognizer 20 may generate a timing data packet once per second along with a corresponding follow up packet. The time packet recognizer 32 latches a time value from the local clock 36 upon detection of each UTP of the received timing data packets and then computes a difference between the latched time value and the time-stamp contained in the corresponding follow up packet. These differences are then averaged for, for example, 10 timing data packets, and the averaged result is then used to adjust the local clock 36. The averaging may be performed by the time packet recognizer 32 or by processor associated with the protocol stack 34.

This averaging technique may also be used if repeaters or gateways or similar communication devices are interposed between the nodes 12 and 14. The averaging would reduce the effects of jitter associated with these types of intervening communication devices.

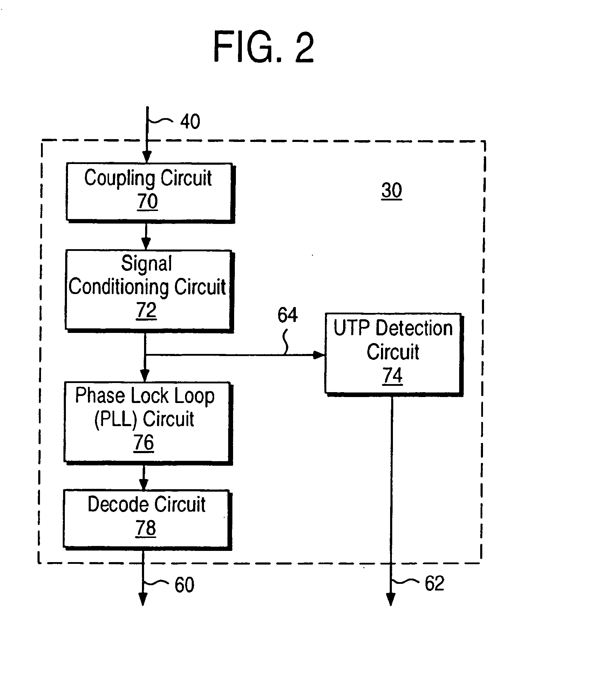

**Figure 2** shows an embodiment of the physical interface 30 which includes a UTP detection circuit 74 that improves accuracy in the synchronization of the local clocks 22 and 36 by reducing jitter in the detection of the UTP 52. The receiving side of the physical interface 30 includes a coupling circuit 70 such as a transformer, a signal conditioning circuit 72, a phase lock loop (PLL) circuit 76, and a decode circuit 78.

The PLL circuit 76 receives a raw incoming bit stream 64 from the signal conditioning circuit 72 and generates the recovered clock signal of the recovered signals 60. The decode circuit 78 uses the recovered clock signal to obtain the recovered bit stream of the recovered signals 60. The recovered bit stream is in phase with a local oscillator of the physical interface 30 and this local oscillator usually drifts with respect to the phase of the local oscillator in the physical interface 24. This phase variation may produce jitter in the detection point of the UTP 52 if the recovered signals 60 are used to detect the UTP 52.

Instead, the UTP detection circuit 74 detects the UTP 52 from the raw incoming bit stream 64, thereby eliminating the jitter associated with the recovered signals 60. The UTP detection circuit 74 provides a UTP detection signal 62 to the time packet recognizer 32 which causes it to latch a time value from the local clock 36 when the UTP 52 is detected.

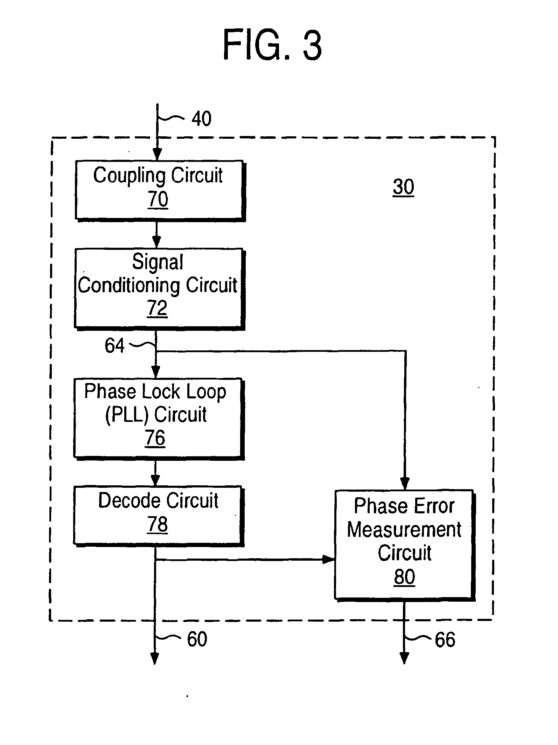

**Figure 3** shows an alternative embodiment of the physical interface 30 which includes a phase error measurement circuit 80 that improves accuracy in the synchronization of the local clocks 22 and 36 by reducing jitter in the detection of the UTP 52. The phase error measurement circuit 80 measures the difference in phase between the raw incoming bit stream 64 and the recovered signals 60. The phase error measurement circuit 80 provides the time packet recognizer 32 with a phase error signal 66 that indicates the difference in phase. The time packet recognizer 32 then uses the phase error signal 66 to correct the time at which it detects the UTP 52.

The phase error measurement circuit 80 may be implemented with a circuit that triggers a pulse by detecting threshold levels of the raw incoming bit stream 64. The phase of this triggered pulse is then compared to the phase of the recovered signals 60. Alternatively, the phase error measurement circuit 80 may include a mixer that measures the phase error.

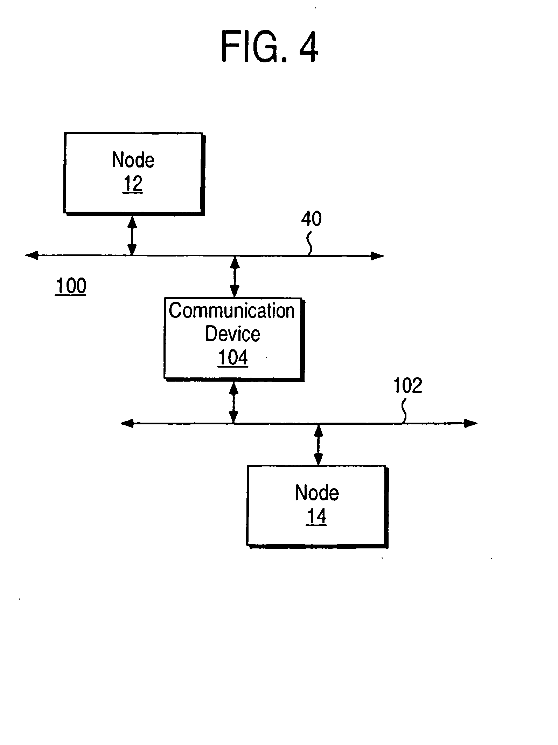

**Figure 4** shows a distributed system 100 in which the nodes 12 and 14 are coupled to different communication links, the communication link 40 and a communication link 102, respectively. A communication device 104 provides communication between nodes connected to the communication link 40 and nodes connected to the communication link 102. The communication device 104 receives timing data packets and follow up packets and other packets from the node 12 via the communication link 40 and transfers them to the node 14 via the communication link 102. The communication device 104 may be a repeater or a switching hub or a gateway or other similar type of device.

The communication device 104 introduces a delay in the transfer of each packet from the communication link 40 to the communication link 102 including the timing data packets. The amount of delay varies depending upon the implementation of the communication device 104 and network load factors. For example, if the communication device 104 is a repeater it may contain phase lock loop or squelch circuitry that introduces delay. If the communication device 104 is a gateway it may contain buffers whose delay depends on the amount of traffic being routed through the gateway at a particular time. Variations in this delay reduces the accuracy of time synchronization between the local clocks 20 and 36 by introducing jitter into the times at which the UTPs of timing data packets are received by the time packer recognizer 32.

One method for reducing the effects of the jitter associated with the communication device 104 is for the time packet recognizer 32 to ignore the received timing data packets that have delay greater than a minimum determined delay. For example, the time packet recognizer 32 may receive multiple pairs of timing data packets and corresponding follow up packets and compute corresponding differences between the detected UTP time of each timing data packet and the time-stamp of the corresponding follow up packet. The minimum difference should be the delay associated with the communication device 104 when its buffers are empty. The jitter and delay introduced by the communication device 104 when its buffers are empty is likely to be much less than when its buffers are active. The time packet recognizer 32 ignores any timing data packets that have a substantially greater delay than this minimum delay by discarding the corresponding latched local time values and not making any local clock adjustments in response to the timing data packets that are ignored. This prevents adjustments to the local clock 36 which are based on excessive jitter in the communication device 104.

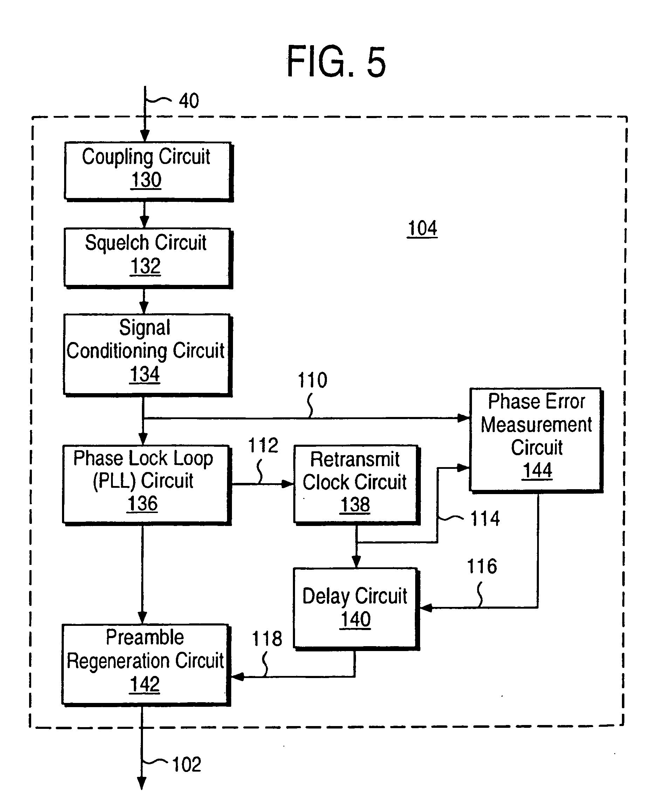

**Figure 5** shows an embodiment of the communication device 104 which includes mechanisms for reducing time synchronization inaccuracies caused by jitter. The communication link 40 to communication link 102 path of the communication device 104 in this embodiment includes a coupling circuit 130, a squelch circuit 132, a signal conditioning circuit 134, a phase lock loop (PLL) circuit 136, a retransmit clock 138, and a preamble regeneration circuit 142.

Packets such as the timing data packet 18 and the follow up packet 16 are received via the communication link 40 by the coupling circuit 130. After the coupling circuit 132 and the squelch circuit 132, the PLL circuit 136 receives a raw incoming bit stream 110 which carries a received packet. The PLL circuit 136 generates a recovered clock signal 112 in response to the raw incoming bit stream 110. The retransmit clock circuit 138 uses the recovered clock signal 112 to derive a retransmit clock signal 114.

The retransmit clock signal 114 includes jitter caused by the PLL circuit 138 and this jitter would reduce the accuracy of the UTP detection in the node 14 if the retransmit clock signal 114 were used to drive the preamble regeneration circuit 142. Instead, this jitter is reduced by a phase error measurement circuit 144 and a delay circuit 140.

The phase error measurement circuit 144 measures the phase difference between the raw incoming bit stream 110 and the retransmit clock signal 114 and generates a phase error signal 116 that indicates this difference. In response to the phase error signal 116, the delay circuit 140 delays the retransmit clock signal 114 to align its phase to the phase of the raw incoming bit stream 110. A delayed and phase aligned clock signal 118 is then provided to the preamble regeneration circuit 142.

The preamble regeneration circuit 142 regenerates preambles for packets relayed from the communication link 40 to the communication link 102. The preamble regeneration circuit 142 also relays the bit stream for received packets onto the communication link 102. The preamble and relayed packet bit stream are aligned to the phase of the clock signal 118.

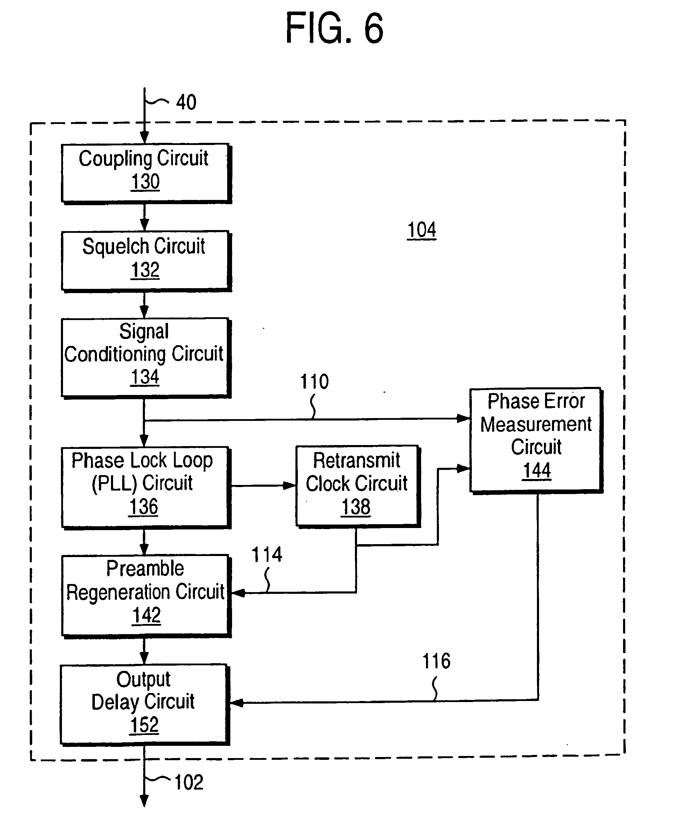

**Figure 6** shows an alternative embodiment of the communication device 104 which includes mechanisms for reducing time synchronization inaccuracies caused by jitter. In this embodiment, the output of the preamble regeneration circuit 142 is clocked by the retransmit clock 114 and is delayed by an output delay circuit 152. The amount of delay introduced by the output delay circuit 152 is controlled by the phase error signal 116 so that the output from the output delay circuit 152 is aligned in phase with the raw incoming bit stream 110.

The output delay circuit 152 may be implemented, for example, with a tapped delay line wherein the bit stream from the preamble generation circuit 142 is steered through the appropriate tapped delay line by the phase error signal 116.

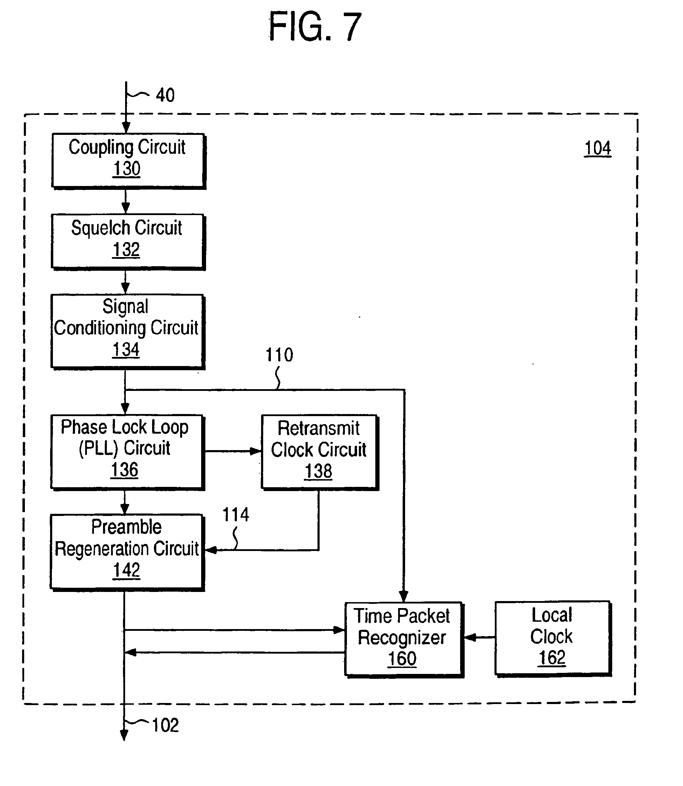

**Figure 7** shows an embodiment of the communication device 104 which includes mechanisms for measuring the delay introduced in the communication device 104 and for passing the measured delay onto the node 14 in a follow up packet. The communication device 104 includes a time packet recognizer 160 that detects the UTP 52 in the raw incoming bit stream 110 and that detects the UTP 52 in the output bit stream on the communication link 102. The time packet recognizer 160 obtains a time value from a local clock 162 when it detects the UTP 52 in the raw incoming bit stream 110 and obtains a time value from the local clock 162 when it detects the UTP 52 on the communication link 102. The difference in these time values is the delay associated with the communication device 104.

The time packet recognizer 160 generates a follow up packet that contains the delay associated with the communication device 104 and transfers it via the communication link 102. The time packet recognizer 32 obtains this follow up packet and uses the delay associated with the communication device 104 to correct the difference between the time-stamp 50 and the time value in the time-stamp latch 38 when adjusting the local clock 36.

## Claims

1. A distributed system, comprising:
first node (12) coupled to a first communication link (40) and having circuitry for generating a timing data packet (18) that includes a unique timing point (52) and circuitry for transferring the timing data packet (18) via the first communication link (40);
communication circuit for transferring the timing data packet (18) between the first communication link (40) and a second communication link (102);
second node (14) having circuitry for receiving the timing data packet (18) via the second communication link (102) and circuitry for detecting the unique timing point (52) and for determining a delay between a time at which the first node (12) generated the timing data packet (18) and a time at which the unique timing point (52) is detected at the second node (14), **characterized by** the second node (14) having circuitry for ignoring the timing data packet (18) if the delay between the time at which the first node (12) generated the timing data packet (18) and the time at which the unique timing point (52) is detected at the second node (14) exceeds a predetermined minimum delay.

2. The distributed system of claim 1, wherein the second node (14) further comprises means for determining the predetermined minimum delay by measuring a series of delays between a series of times at which the first node (12) generated a series of timing data packets and a series of times at which a series of corresponding unique timing points (52) are detected at the second node (14) and then selecting a minimum of the series of delays.

## Patentansprüche

1. Ein verteiltes System, das folgende Merkmale aufweist:
einen ersten Knoten (12), der mit einer ersten Kommunikationsverknüpfung (40) gekoppelt ist und eine Schaltungsanordnung zum Erzeugen eines Zeitgebungsdatenpakets (18), das einen eindeutigen Zeitgebungspunkt (52) umfasst, und eine Schaltungsanordnung zum Transferieren des Zeitgebungsdatenpakets (18) über die erste Kommunikationsverknüpfung (40) aufweist;
eine Kommunikationsschaltung zum Transferieren des Zeitgebungsdatenpakets (18) zwischen der ersten Kommunikationsverknüpfung (40) und einer zweiten Kommunikationsverknüpfung (102);
einen zweiten Knoten (14), der eine Schaltungsanordnung zum Empfangen des Zeitgebungsdatenpakets (18) über die zweite Kommunikationsverknüpfung (102) und eine Schaltungsanordnung zum Erfassen des eindeutigen Zeitgebungspunkts (52) und zum Bestimmen einer Verzögerung zwischen einer Zeit, zu der der erste Knoten (12) das Zeitgebungsdatenpaket (18) erzeugte, und einer Zeit, zu der der eindeutige Zeitgebungspunkt (52) an dem zweiten Knoten (14) erfasst wird, aufweist, **dadurch gekennzeichnet, dass** der zweite Knoten (14) eine Schaltungsanordnung zum Ignorieren des Zeitgebungsdatenpakets (18), falls die Verzögerung zwischen der Zeit, zu der der erste Knoten (12) das Zeitgebungsdatenpaket (18) erzeugte, und der Zeit, zu der der eindeutige Zeitgebungspunkt (52) an dem zweiten Knoten (14) erfasst wird, eine vorbestimmte minimale Verzögerung überschreitet, umfasst.

2. Das verteilte System gemäß Anspruch 1, bei dem der zweite Knoten (14) ferner eine Einrichtung zum Bestimmen der vorbestimmten minimalen Verzögerung durch Messen einer Serie von Verzögerungen zwischen einer Serie von Zeiten, zu denen der erste Knoten (12) eine Serie von Zeitgebungsdatenpaketen erzeugte, und einer Serie von Zeiten, zu denen eine Serie entsprechender eindeutiger Zeitgebungspunkte (52) an dem zweiten Knoten (14) erfasst wird, und durch anschließendes Auswählen eines Minimums der Serie von Verzögerungen, umfasst.

## Revendications

1. Système distribué, comprenant :
un premier noeud (12) couplé à une première liaison de communication (40) et ayant une circuiterie pour engendrer un paquet de données de cadencement (18) qui inclut un point de cadencement unique (52) et une circuiterie pour transférer le paquet de données de cadencement (18) par l'intermédiaire de la première liaison de communication (40) ;
un circuit de communication pour transférer le paquet de données de cadencement (18) entre la première liaison de communication (40) et une deuxième liaison de communication (102) ;
un deuxième noeud (14) ayant une circuiterie pour recevoir le paquet de données de cadencement (18) par l'intermédiaire de la deuxième liaison de communication (102) et une circuiterie pour détecter le point de cadencement unique (52) et pour déterminer un retard entre un temps à laquelle le premier noeud (12) a engendré le paquet de données de cadencement (18) et un temps à laquelle le point de cadencement unique (52) est détecté au deuxième noeud (14),
**caractérisé en ce que** le deuxième noeud (14) possède une circuiterie pour ignorer le paquet de données de cadencement (18) si le retard entre le temps auquel le premier noeud (12) a engendré le paquet de données de cadencement (18) et le temps auquel le point de cadencement unique (52) est détecté au deuxième noeud (14) dépasse un retard minimum prédéterminé.

2. Système distribué de la revendication 1, dans lequel le deuxième noeud (14) comprend en outre un moyen pour déterminer le retard minimum prédéterminé en mesurant une série de retards entre une série de temps auxquels le premier noeud (12) a engendré une série de paquets de données de cadencement et une série de temps auxquels une série de points de cadencement uniques (52) en correspondance sont détectés au deuxième noeud (14) et en sélectionnant alors un minimum de la série de retards.
